# EUROPÄISCHE PATENTSCHRIFT

(11) **EP 3 106 942 B1**
(45) Veröffentlichungstag und Bekanntmachung des Hinweises auf die Patenterteilung: **15.08.2018**
(21) Anmeldenummer: 16172514.8
(22) Anmeldetag: 01.06.2016
(51) Int. Cl.: G05B 19/042, G05B 9/02

(54) **MODULARE SICHERHEITSSTEUERUNG**
MODULAR SAFETY CONTROL
COMMANDE DE SÉCURITÉ MODULAIRE

(30) Priorität: 17.06.2015 DE 102015109687
(43) Veröffentlichungstag der Anmeldung: 21.12.2016
(73) Patentinhaber: SICK AG, 79183 Waldkirch (DE)
(72) Erfinder: Haberstroh, Frank, 79183 Waldkirch (DE)

(56) Entgegenhaltungen:
- WO-A1-01/81820
- DE-U1- 29 617 827
- DE-U1- 29 712 772

## Beschreibung

Die Erfindung betrifft eine modulare Sicherheitssteuerung gemäß dem Anspruch 1. Modulare Sicherheitssteuerungen werden dazu verwendet, um Automatisierungsanlagen zu überwachen und zu steuern. Hierbei werden Signale von Signalgebern empfangen und ausgewertet und entsprechende Steuersignale erstellt und an angeschlossenen Aktoren ausgesendet. Während eines Betriebes der modularen Sicherheitssteuerung werden Zustände der Sicherheitssteuerung bzw. der Automatisierungsanlage einem Benutzer angezeigt.

Die Zustände können beispielsweise Eingangs- bzw. Ausgangsfehler, kritischer interner Fehler, allgemeiner Status, wie z.B. Startup oder Reset, der Sicherheitssteuerung bzw. der Automatisierungsanlage sein.
DE 10 2011 053 544 A1 offenbart ein Prozessregelungssystem für insbesondere einen Bioreaktor, das mehrere Steuerungseinheiten sowie Eingabe-/Ausgabegeräte umfasst. Die Steuereinheiten und die Eingabe-/Ausgabegeräte sind kommunikativ mit mindestens einer Host- oder Bediener-Workstation via einem Bus gekoppelt, so dass eine Verschaltung des Systems auf der Host- oder Bediener-Workstation für einen Bediener zum Beobachten oder zum Konfigurieren grafisch angezeigt werden kann.
WO 01/81820 A1 offenbart ein modulares Sicherheitsschaltgeräte-System gemäß dem Oberbegriff des Anspruchs 1. Das Sicherheitsschaltgeräte-System umfasst ein Steuermodul und Eingangs- sowie Ausgangsmodule mit LEDs, wobei das Steuermodul die LEDs lediglich derart ansteuert, dass die eingestellte Betriebsart der Eingangs- und Ausgangsmodule angezeigt wird.

DE 296 17 827 U1 offenbart eine Steuerungseinrichtung für Solarien, die ein LED-Punktmatrixdisplay als Anzeigevorrichtung umfasst, so dass ein Nutzer über eine Tastaturmatrix die Programme des Solariums auswählen und das Auswählen über das Punktmatrixdisplay anschauen kann.

DE 297 12 772 U1 offenbart eine Anzeigevorrichtung für einen Herd, die ein Kombinations-Anzeigefeld in LCD-Segmentanzeigetechnik oder ein Kombinations-Anzeigefeld in DOT-Matrix-Anzeigetechnik umfasst.

Es ist eine Aufgabe der Erfindung, eine modulare Sicherheitssteuerung derart zu verbessern, dass eine Erhöhung der Sicherheit der Sicherheitssteuerung ermöglicht ist.

Die Aufgabe wird erfindungsgemäß gelöst durch eine modulare Sicherheitssteuerung mit einer zentralen Steuereinheit, zumindest einer Eingangseinheit zum Empfangen von Eingangssignalen eines Signalgebers, und zumindest einer Ausgangseinheit zum Ausgeben von Ausgangssignalen an zumindest einem angeschlossenen Aktor, wobei Anzeigemittel zum Anzeigen von Zuständen an der Eingangseinheit und der Ausgangseinheit vorgesehen sind, wobei die Steuereinheit Anzeigemittel aufweist und derart ausgelegt ist, dass alle Anzeigemittel der modularen Sicherheitssteuerung durch die Steuereinheit ansteuerbar sind und alle Anzeigemittel in einem ersten Anzeigemodus oder in einem zweiten Anzeigemodus durch die Steuereinheit aktivierbar sind, und wobei die Steuereinheit dazu eingerichtet ist, den ersten oder zweiten Anzeigemodus entsprechend eines vorbestimmten Ereignisses auszuwählen, das nicht-sicherheitsrelevant oder sicherheitsrelevant sein kann, und in dem ersten Anzeigemodus, der gewählt wird, wenn es sich bei dem Ereignis um ein nicht-sicherheitsrelevantes Ereignis handelt, die Anzeigemittel die Zustände als punktuelle Leuchtsignale anzeigen und in dem zweiten Anzeigemodus, der gewählt wird, wenn es sich bei dem Ereignis um ein sicherheitsrelevantes Ereignis handelt, die Anzeigemittel die Zustände als lesbaren Text anzeigen.

Dies hat den Vorteil, dass die erfindungsgemäße modulare Sicherheitssteuerung komplexe Informationen auf einfache Art und Weise dem Nutzer verständlich anzeigen kann. Dadurch benötigt der Nutzer keine Bedienungsanleitung, um die angezeigte Information zu interpretieren bzw. zu verstehen. D.h. im Falle eines nicht-sicherheitsrelevanten Ereignisses wählt die Steuereinheit den ersten Anzeigemodus aus, bei dem die Zustandsinformation durch einzelne LED als punktuelle Leuchtsignale angezeigt wird. Im Falle eines sicherheitsrelevanten Ereignisses wählt die Steuereinheit den zweiten Anzeigemodus aus, bei dem die Zustandsinformation durch die LED Dot Matrix als Schriftzug angezeigt wird. Eine umgekehrte Auslegung der Anzeigemodi wäre auch denkbar.

Gemäß einem weiteren bevorzugten Ausführungsbeispiel sind die Anzeigemittel als LED Dot Matrix an der Steuereinheit, der Eingangseinheit und der Ausgangseinheit ausgebildet. Hierdurch ergibt sich der Vorteil, dass eine vielfältige Anzeigemöglichkeit durch die erfindungsgemäße modulare Sicherheitssteuerung für den Nutzer möglich ist.

Gemäß einem weiteren bevorzugten Ausführungsbeispiel ist der lesbare Text statisch oder dynamisch anzeigbar. Vorzugsweise ist es vorteilhaft, dass der lesbare Text als Laufschrift durch die Anzeigemittel anzeigbar ist.

Gemäß einem weiteren bevorzugten Ausführungsbeispiel steuert die Steuereinheit die Anzeigemittel in einem festen Zeitintervall an, so dass die Zustände in dem festen Zeitintervall anzeigbar sind. Dies hat den Vorteil, dass die Zustandsinformation in vorgegebenen Zeitintervallen angezeigt wird, so dass eine kontinuierliche Überwachung möglich ist.

Gemäß einem weiteren bevorzugten Ausführungsbeispiel sind die Steuereinheit, die Eingangseinheit und die Ausgangseinheit über ein Bussystem miteinander verbunden, so dass die Einheiten dezentral zueinander angeordnet sind.

Gemäß einem weiteren bevorzugten Ausführungsbeispiel übermittelt die Steuereinheit den lesbaren Text an die dezentrale Eingangs- und Ausgangseinheit mittels des Bussystems, so dass der lesbare Text über die Anzeigemittel der Einheiten laufend anzeigbar ist. Hieraus ergibt sich der Vorteil, dass die Zustandsinformation trotz einer Beabstandung zwischen den Modulen, z.B. durch die Anordnung der Module in unterschiedlichen Schaltschränken, deutlich anzeigbar ist.

Gemäß einem weiteren bevorzugten Ausführungsbeispiel ist ein Abstand zwischen den Anzeigemitteln in horizontaler und vertikaler Richtung in Bezug auf eine Anordnung der Steuereinheit, der Eingangseinheit und der Ausgangseinheit zueinander derart gewählt, dass die Anzeigemittel verzerrungsfrei ablesbar sind.

Gemäß einem weiteren bevorzugten Ausführungsbeispiel ist der lesbare Text für den zweiten Anzeigemodus als benutzerdefinierter Text mittels der Steuereinheit konfigurierbar. Hierdurch kann vorteilhafterweise der Nutzer selbsterstellte Texte, die bestimmte Zustände beschreiben, frei konfigurieren und mittels eines Tools, wie z.B. einem Rechner, in die Steuereinheit eingeben.

Die erfindungsgemäße modulare Sicherheitssteuerung kann auf ähnliche Weise durch weitere Merkmale ausgestaltet werden und zeigt dabei ähnliche Vorteile. Derartige weitere Merkmale sind beispielhaft, aber nicht abschließend, in den sich an dem unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer erfindungsgemäßen modularen Sicherheitssteuerung;
- Fig. 2: eine schematische Darstellung eines Ausführungsbeispiels der erfindungsgemäßen modularen Sicherheitssteuerung.

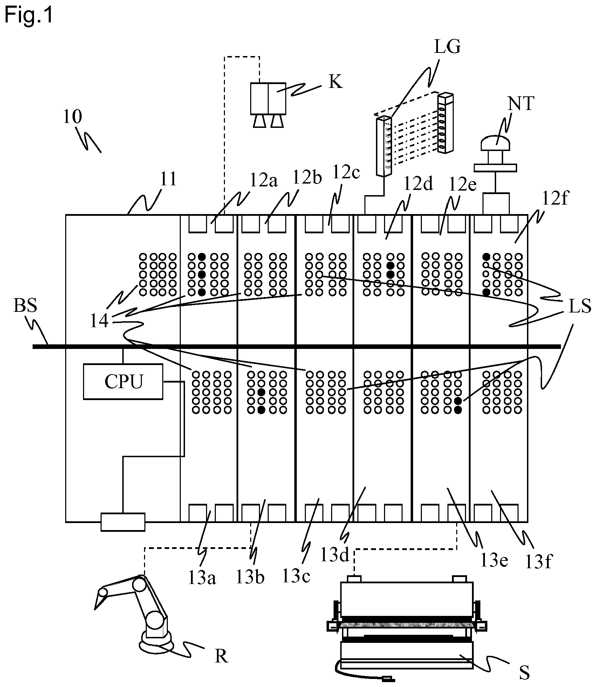

In den Figuren 1 ist eine schematische Darstellung einer erfindungsgemäßen modularen Sicherheitssteuerung 10 gezeigt, die zum Steuern einer Automatisierungsanlage verwendet wird. Bei dem dargestellten Beispiel der Automatisierungsanlage sind ein Roboter R und eine Stanze S abgebildet, wobei der Roboter R das zu verarbeitende Werkstück an die Stanze S zuführt. Zur Absicherung des Roboters R und der Stanze S sind Signalgeber vorgesehen, die die Arbeitsabläufe des Roboters R und der Stanze S überwachen und gegebenenfalls stoppen. Die Signalgeber werden in dem dargestellten Beispiel der Automatisierungsanlage durch eine Kamera K, ein Lichtgitter LG und eine Notaus-Taste NT gebildet.

Die beschriebene beispielhafte Automatisierungsanlage wird durch die erfindungsgemäße modulare Sicherheitssteuerung 10 sicher gesteuert, wobei das dargestellte Ausführungsbeispiel der erfindungsgemäßen modularen Sicherheitssteuerung 10 aus einer zentralen Steuereinheit 11, aus sechs Eingangseinheiten 12a bis 12y und aus sechs Ausgangseinheiten 13a bis 13y gebildet ist. Hierbei werden die zentrale Steuereinheit 11, die Eingangseinheiten 12a bis 12y und die Ausgangseinheiten 13a bis 13y auch vereinfacht als Module bezeichnet.

Die zentrale Steuereinheit 11 ist mittels eines Bussystems BS mit allen Eingangseinheiten 12a bis 12y und Ausgangseinheiten 13a bis 13y verbunden, so dass die zentrale Steuereinheit 11 die gesamte Automatisierungsanlage sicher überwachen und steuern kann.

Die Eingangseinheit 12a bis 12y ist zum Empfangen von Eingangssignalen eines angeschlossenen Signalgebers vorgesehen, wobei in dem dargestellten Ausführungsbeispiel der erfindungsgemäßen modularen Sicherheitssteuerung 10 die Kamera K an die Eingangseinheit mit dem Bezugszeichen 12a, das Lichtgitter LG an die Eingangseinheit mit dem Bezugszeichen 12d und die Notaus-Taste NT an die Eingangseinheit mit dem Bezugszeichen 12f angeschlossen sind.

Die Ausgangseinheit 13a bis 13y ist zum Ausgeben von Ausgangssignalen an einem angeschlossenen Aktor, in diesem Ausführungsbeispiel an dem Roboter R und an die Stanze S, vorgesehen. In dem dargestellten Ausführungsbeispiel der erfindungsgemäßen modularen Sicherheitssteuerung 10 sind der Roboter R an die Ausgangseinheit mit dem Bezugszeichen 13b und die Stanze S an die Ausgangseinheit mit dem Bezugszeichen 13e angeschlossen, so dass bei einem Fehlerfall oder einem entsprechenden Eingangssignal von der Kamera K, dem Lichtgitter LG und/oder der Notaus-Taste NT an die zentrale Steuereinheit 11 entsprechende Ausgangssignale von der zentralen Steuereinheit 11 generiert und von den Ausgangseinheiten 13b und 13e an dem Roboter R und die Stanze S ausgegeben werden. Die Ausgangssignale bewirken einen sicheren Stopp der Automatisierungsanlage bzw. des Roboters R und der Stanze S.

Die erfindungsgemäße modulare Sicherheitssteuerung 10 umfasst Anzeigemittel 14 zum Anzeigen von Zuständen der erfindungsgemäßen modularen Sicherheitssteuerung 10. Die Anzeigemittel 14 sind an der zentralen Steuereinheit 11, an jeder Eingangseinheit 12a bis 12y und an jeder Ausgangseinheit 13a bis 13y vorgesehen, wobei die Anzeigemittel 14 abwechselnd in einen eingeschalteten und in einen ausgeschalteten Zustand versetzbar sind. Vorteilhafterweise sind die Anzeigemittel 14 als LED Dot Matrix an der zentralen Steuereinheit 11, an jeder Eingangseinheit 12a bis 12y und an jeder Ausgangseinheit 13a bis 13y ausgebildet.

Unter "Zuständen der erfindungsgemäßen modularen Sicherheitssteuerung 10" wird erfindungsgemäß die Information über einen momentanen funktionellen Zustand der gesamten Automatisierungsanlage verstanden, wobei diese momentane funktionelle Zustandsinformation der gesamten Automatisierungsanlage mittels der Anzeigemittel 14 einem Nutzer angezeigt wird, so dass der Nutzer auf einen Blick über die Anzeigemittel 14 den momentanen Betriebszustand der gesamten Automatisierungsanlage erfassen kann. D.h. anhand der Anzeigemittel 14 kann der Nutzer die Information entnehmen, ob sich die Automatisierungsanlage und alle Anlagenkomponenten, wie die angeschlossenen Signalgeber und Aktoren, im fehlerfreien Betrieb befinden oder ob sich ein Betriebszustand eingestellt hat, der die Aufmerksamkeit des Nutzers erfordert.

Erfindungsgemäß ist die Steuereinheit 11 derart ausgelegt, dass alle Anzeigemittel 14 von der Steuereinheit 11 ansteuerbar sind und alle Anzeigemittel 14 in einem ersten Anzeigemodus oder in einem zweiten Anzeigemodus durch die Steuereinheit 11 aktivierbar sind. Mit anderen Worten die Steuereinheit 11 kann sowohl auf die eigene Anzeigemittel 14 als auch auf die Anzeigemittel 14 aller Eingangseinheiten 12a bis 12y und Ausgangseinheiten 13a bis 13y zugreifen und ansteuern. Hierbei aktiviert die Steuereinheit 11 die Anzeigemittel 14 in dem ersten Anzeigemodus, in dem die Anzeigemittel 14 die Zustände als punktuelle Leuchtsignale LS anzeigen, oder in dem zweiten Anzeigemodus, in dem die Anzeigemittel 14 die Zustände als lesbarer Text T anzeigen.

Durch die zwei unterschiedlichen Anzeigemodi ergibt sich der Vorteil, dass der Nutzer die erfindungsgemäße modulare Sicherheitssteuerung 10 für unterschiedliche Ereignisse, die unterschiedliche Zustände der Automatisierungsanlage bewirken, frei konfigurieren kann, so dass vorteilhafterweise die derart konfigurierte Steuereinheit 11 den ersten und zweiten Anzeigemodus entsprechend eines vorbestimmten Ereignisses auswählt, wobei das vorbestimmte Ereignis nicht-sicherheitsrelevant oder sicherheitsrelevant sein kann. D.h. mit anderen Worten, der Nutzer konfiguriert die erfindungsgemäße modulare Sicherheitssteuerung 10 so, dass die Steuereinheit 11 zum Beispiel den ersten Anzeigemodus für ein nicht-sicherheitsrelevantes Ereignis und den zweiten Anzeigemodus für ein sicherheitsrelevantes Ereignis auswählt, wodurch der Nutzer die Wichtigkeit des angezeigten Zustandes der Automatisierungsanlage sofort über die Anzeigemittel 14 erfassen kann.

Die Anzeigemittel 14 bestehen aus LEDs bzw. sind vorzugsweise als LED Dot Matrix an der Steuereinheit 11, der Eingangs- 12a bis 12y und Ausgangseinheit 13a bis 13y ausgebildet, so dass erfindungsgemäß unter "punktuelle Leuchtsignale LS" verstanden wird, dass einzelne LEDs eingeschaltet werden, um den momentanen Zustand der Automatisierungsanlage anzuzeigen.

Wie in Figur 1 dargestellt, wählt die Steuereinheit 11 den ersten Anzeigemodus aus, so dass über bestimmte Eingangseinheiten 12a, 12d und 12f und bestimmte Ausgangseinheiten 13b und 13e mittels punktueller Leuchtsignale LS die momentane Zustandsinformation der Automatisierungsanlage angezeigt wird. Hierbei können durch die Verwendung farbliche Unterschiede in den punktuellen Leuchtsignalen LS einen erhöhten Informationsgehalt dem Nutzer mitgeteilt werden.

Insbesondere steuert die Steuereinheit 11 die Anzeigemittel 14 in einem festen Zeitintervall an, so dass die Zustände während des Betriebes der Automatisierungsanlage in dem festen Zeitintervall angezeigt werden.

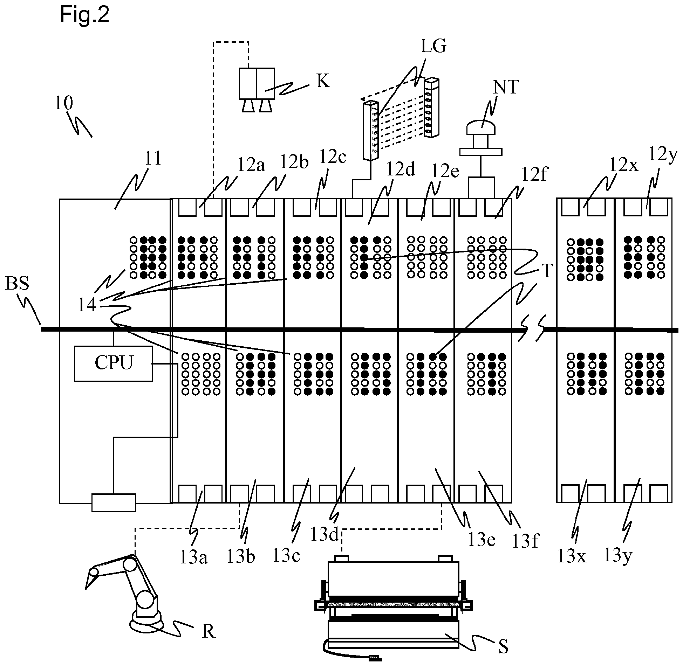

In dem von der Steuereinheit 11 ausgewählten zweiten Anzeigemodus zeigen die Anzeigemittel 14 die Information bzgl. der Zustände der Automatisierungsanlage als lesbarer Text T an, wie in der Figur 2 dargestellt. Dies wird vor allem dadurch ermöglicht, dass die Steuereinheit 11 auf alle Anzeigemittel 14 der angeschlossenen Eingangseinheiten 12a bis 12y und Ausgangseinheiten 13a bis 13y zugreifen und ansteuern kann.

Der lesbare Text T wird von der Steuereinheit 11 statisch oder dynamisch angezeigt. D.h. bei einer statischen Anzeige werden die Zustände bzw. die Zustandsinformationen durch die Anzeigemittel 14 zeitunabhängig unverändert eingeblendet, so dass wie bei dem dargestellten Beispiel in der Figur 2 das Wort "RESET" dem Nutzer mitgeteilt wird. Bei einer dynamischen Anzeige wird das dargestellte Wort "RESET" als Laufschrift durch alle Anzeigemittel 14 angezeigt. Hierbei sind vorteilhafterweise ganze Sätze anzeigbar, so dass ein erhöhter Informationsgehalt dem Nutzer mitgeteilt werden kann.

In der Figur 2 teilt die Steuereinheit 11 somit dem Nutzer die Zustandsinformation mit, dass sich die Automatisierungsanlage bzw. die erfindungsgemäße modulare Sicherheitssteuerung 10 in einem Reset-Zustand befindet oder dass weitergehend als Laufschrift eine Reset-Betätigung durch den Nutzer erforderlich ist. Der lesbare Text T lässt sich als benutzerdefinierter Text mittels eines Tools in die Steuereinheit 11 frei konfigurieren und eingeben, so dass gemäß der Konfiguration des Nutzers die Anzeigemittel 14 in dem zweiten Anzeigemodus den benutzerdefinierten Text anzeigen kann.

D.h. mit anderen Worten, der Nutzer kann einen Zustand der erfindungsgemäßen modularen Sicherheitssteuerung 10 bzw. der Automatisierungsanlage mit einem erstellten Text T definieren bzw. konfigurieren und mittels z.B. eines Rechners diesen Zustand mit dem lesbaren Text T in die Steuereinheit 11 eingeben. Bei Eintritt des Zustandes wird der benutzerdefinierte Text T durch die Anzeigemittel 14 im zweiten Anzeigemodus angezeigt, der vorzugsweise nicht nur den Zustand an sich, sondern auch die Ursache des Zustandes dem Nutzer mitteilt, wie z.B. "Nothalt-Taste betätigt - RESET".

Hierdurch ist ein wesentlich höherer Informationsgehalt betreffend einem Zustand der erfindungsgemäßen modularen Sicherheitssteuerung 10 dem Nutzer mitteilbar. Der Nutzer erkennt nicht nur den momentanen, möglicherweise fehlerhaften, Zustand der erfindungsgemäßen modularen Sicherheitssteuerung 10, sondern auch gleich die Quelle zur Behebung des (fehlerhaften) Zustandes.

Die dargestellte Steuereinheit 11, Eingangseinheiten 12a bis 12y und Ausgangseinheiten 13a bis 13y sind durch das Bussystem BS miteinander verbunden. Hierdurch können die Module örtlich beabstandet zueinander angeordnet sein. D.h. einige Eingangseinheiten 12x und 12y und Ausgangseinheiten 13x und 13y sind dezentral von der zentralen Steuereinheit 11 und den restlichen Eingangseinheiten 12a bis 12f und Ausgangseinheiten 13a bis 13f, z.B. in einem anderen Schaltschrank, angeordnet.

Durch die Verbindung mittels des Bussystems BS und den Zugriff der zentralen Steuereinheit 11 auf sämtliche Anzeigemittel 14 der erfindungsgemäßen modularen Sicherheitssteuerung 10 wird der lesbare Text T auch an die dezentralen Eingangseinheiten 12x und 12y und Ausgangseinheiten 13x und 13y übermittelt, so dass der lesbare Text T auch über die dezentralen Eingangseinheiten 12x und 12y und Ausgangseinheiten 13x und 13y anzeigbar ist. Dadurch ist dem Nutzer die Möglichkeit gegeben, auch an entfernten Modulen die Zustandsinformation der erfindungsgemäßen modularen Sicherheitssteuerung 10 bzw. der Automatisierungsanlage mitgeteilt zu bekommen.

Insbesondere ist es bei einer weit beabstandeten Automatisierungsanlage möglich, die Zustände und deren Ursache lokal an der jeweiligen dezentralen Eingangseinheit 12x und 12y oder Ausgangseinheit 13x und 13y dem Nutzer anzuzeigen, an der diese Zustände auftreten, so dass eine Fehlersuche vereinfacht werden kann.

Bei dem dargestellten Ausführungsbeispiel der Anzeigemittel 14 sind die Anzeigemittel 14 als 4 x 5 LEDs Dot Matrix aufgebaut. Hierbei können die LEDs Dot Matrix auch anders aufgebaut sein, so dass schmalere Eingangseinheiten 12a bis 12y und Ausgangseinheiten 13a bis 13y verwendet werden können, die zusammen eine große Anzeige realisieren lassen und komplexe Informationen darstellen können.

Vorteilhafterweise sind die Anzeigemittel 14 in horizontaler und auch in vertikaler Richtung zueinander gleich beabstandet angeordnet, so dass die abgebildete Zustandsinformation auf den Anzeigemitteln 14 verzerrungsfrei ablesbar sind. Mit anderen Worten, die Anzeigemittel 14 der benachbarten Eingangseinheiten 12a bis 12y und Ausgangseinheiten 13a bis 13y sind auf einer Linie zueinander angeordnet. Dadurch kann eine große einheitliche LEDs Dot Matrix gebildet werden.

Die Steuereinheit 11 ist vorzugsweise derart ausgebildet, dass die Steuereinheit 11 in bestimmte Lage zueinander angeordnete LEDs der Anzeigemittel 14 zum verzerrungsfreien Anzeigen der Zustandsinformation ansteuert, so dass ein möglicher horizontaler bzw. vertikaler Unterschied zwischen den LEDs innerhalb der LEDs Dot Matrix ausgeglichen werden kann. D.h., die Steuereinheit 11 erkennt durch den Zugriff auf alle Anzeigemittel 14 die jeweilige Position der LEDs des Anzeigemittels 14 zueinander und steuert die Anzeigemittel 14 so an, dass z.B. LEDs in gleicher Reihe und Spalte von unterschiedlichen Eingangseinheiten 12a bis 12y und Ausgangseinheiten 13a bis 13y aktiviert werden, wodurch die Zustandsinformation bzw. der lesbare Text T verzerrungsfrei angezeigt werden kann.

Mit anderen Worten, wenn z.B. die LEDs des Anzeigemittels 14 in den Spalten doppelt so weit zueinander wie die LEDs in den Zeilen beabstandet angeordnet sind, so aktiviert die Steuereinheit 11 alle LEDs einer Spalte, aber lediglich jede zweite LED einer Zeile, um den Text T anzuzeigen, so dass die unterschiedliche Beabstandung der LEDs innerhalb des Anzeigemittels 14 optisch ausgeglichen werden können und der Text T verzerrungsfrei angezeigt werden kann.

### Bezugszeichenliste

- 10: Modulare Sicherheitssteuerung
- 11: Steuereinheit
- 12a bis 12y: Eingangseinheit
- 13a bis 13y: Ausgangseinheit
- 14: Anzeigemittel
- BS: Bussystem
- K: Kamera
- LG: Lichtgitter
- LS: Leuchtsignale
- NT: Notaus-Taste
- R: Roboter
- S: Stanze

## Patentansprüche

1. Modulare Sicherheitssteuerung (10) mit einer zentralen Steuereinheit (11), zumindest einer Eingangseinheit (12a - 12y) zum Empfangen von Eingangssignalen eines Signalgebers (K, LG, NT), und zumindest einer Ausgangseinheit (13a - 13y) zum Ausgeben von Ausgangssignalen an zumindest einem angeschlossenen Aktor (R, S), wobei Anzeigemittel (14) zum Anzeigen von Zuständen an der Eingangseinheit (12a - 12y) und der Ausgangseinheit (13a - 13y) vorgesehen sind, **dadurch gekennzeichnet, dass**
die Steuereinheit (11) Anzeigemittel (14) aufweist und derart ausgelegt ist, dass alle Anzeigemittel (14) der modularen Sicherheitssteuerung (10) durch die Steuereinheit (11) ansteuerbar sind und alle Anzeigemittel (14) in einem ersten Anzeigemodus oder in einem zweiten Anzeigemodus durch die Steuereinheit (11) aktivierbar sind, und wobei die Steuereinheit (11) dazu eingerichtet ist, den ersten oder zweiten Anzeigemodus entsprechend eines vorbestimmten Ereignisses auszuwählen, das nicht-sicherheitsrelevant oder sicherheitsrelevant sein kann, und in dem ersten Anzeigemodus, der gewählt wird, wenn es sich bei dem Ereignis um ein nicht-sicherheitsrelevantes Ereignis handelt, die Anzeigemittel (14) die Zustände als punktuelle Leuchtsignale (LS) anzeigen und in dem zweiten Anzeigemodus, der gewählt wird, wenn es sich bei dem Ereignis um ein sicherheitsrelevantes Ereignis handelt, die Anzeigemittel (14) die Zustände als lesbarer Text (T) anzeigen.

2. Modulare Sicherheitssteuerung (10) nach Anspruch 1, **dadurch gekennzeichnet, dass** die Anzeigemittel (14) als LED Dot Matrix an der Steuereinheit (11), der Eingangseinheit (12a - 12y) und der Ausgangseinheit (13a - 13y) ausgebildet sind.

3. Modulare Sicherheitssteuerung (10) nach Anspruch 1 oder 2, **dadurch gekennzeichnet, dass** der lesbare Text (T) statisch oder dynamisch anzeigbar ist.

4. Modulare Sicherheitssteuerung (10) nach Anspruch 3, **dadurch gekennzeichnet, dass** der lesbare Text (T) als Laufschrift durch die Anzeigemittel (14) anzeigbar ist.

5. Modulare Sicherheitssteuerung (10) nach einem der vorhergehenden Ansprüche, **dadurch gekennzeichnet, dass** die Steuereinheit (11) die Anzeigemittel (14) in einem festen Zeitintervall ansteuert, so dass die Zustände in dem festen Zeitintervall anzeigbar sind.

6. Modulare Sicherheitssteuerung (10) nach einem der vorhergehenden Ansprüche, **dadurch gekennzeichnet, dass** die Steuereinheit (11), die Eingangseinheit (12a - 12y) und die Ausgangseinheit (13a - 13y) über ein Bussystem (BS) miteinander verbunden sind, so dass die Einheiten (12a - 12y; 13a - 13y) dezentral zueinander angeordnet sind.

7. Modulare Sicherheitssteuerung (10) nach Anspruch 6, **dadurch gekennzeichnet, dass** die Steuereinheit (11) den lesbaren Text (T) an die zentrale Eingangs- und Ausgangseinheit (12a - 12y; 13a - 13y) mittels des Bussystem (BS) übermittelt, so dass der lesbare Text (T) über die Anzeigemittelt (14) der Einheiten (12a - 12y; 13a - 13y) laufend anzeigbar ist.

8. Modulare Sicherheitssteuerung (10) nach einem der vorhergehenden Ansprüche, **dadurch gekennzeichnet, dass** ein Abstand zwischen den Anzeigemittel (14) in horizontaler und vertikaler Richtung in Bezug auf eine Anordnung der Steuereinheit (11), der Eingangseinheit (12a - 12y) und der Ausgangseinheit (13a - 13y) zueinander derart gewählt ist, dass die Anzeigemittel (14) verzerrungsfrei ablesbar sind.

9. Modulare Sicherheitssteuerung (10) nach einem der vorhergehenden Ansprüche, **dadurch gekennzeichnet, dass** der lesbare Text (T) für den sicherheitsrelevanten zweiten Anzeigemodus als benutzerdefinierter Text in der Steuereinheit (11) freikonfigurierbar ist.

## Claims

1. A modular safety control (10) having a central control unit (11); at least one input unit (12a - 12y) for receiving received signals of a signal generator (K, LG, NT); and at least one output unit (13a - 13y) for outputting output signals to at least one connected actuator (R, S), wherein display means (14) are provided for displaying states at the input unit (12a - 12y) and at the output unit (13a - 13y), **characterized in that**
the control unit (11) has display means (14) and is configured such that all the display means (14) of the modular safety control (10) can be controlled by the control unit (11) and all the display means (14) can be activated by the control unit (11) in a first display mode or in a second display mode, and with the control unit (11) being configured to select the first or second display mode in accordance with a predefined event that can be non-safety relevant or safety relevant, and with the display means (14) displaying the states as luminous dot signals (LS) in the first display mode that is selected when the event is a non-safety relevant event and with the display means (14) displaying the states as readable text (T) in the second display mode that is selected when the event is a safety relevant event.

2. A modular safety control (10) in accordance with claim 1, **characterized in that** display means (14) are configured as an LED dot matrix at the control unit (11), at the input unit (12a - 12y), and at the output unit (13a - 13y).

3. A modular safety control (10) in accordance with claim 1 or claim 2, **characterized in that** the readable text (T) is statically or dynamically displayable.

4. A modular safety control (10) in accordance with claim 3, **characterized in that** the readable text (T) is displayable as a ticker by the display means (14).

5. A modular safety control (10) in accordance with any one of the preceding claims, **characterized in that** the control unit (11) controls the display means (14) in a fixed time interval so that the states can be displayed in the fixed time interval.

6. A modular safety control (10) in accordance with any one of the preceding claims, **characterized in that** the control unit (11), the input unit (12a - 12y), and the output unit (13a- 13y) are connected to one another via a bus system (BS) so that the units (12a - 12y; 13a - 13y) are arranged decentralized with respect to one another.

7. A modular safety control (10) in accordance with claim 6, **characterized in that** the control unit (11) transmits the readable text (T) to the decentralized input unit and output unit (12a - 12y; 13a - 13y) by means of the bus system (BS) so that the readable text (T) can be continuously displayed via the display means (14) of the units (12a - 12y; 13a - 13y).

8. A modular safety control (10) in accordance with any one of the preceding claims, **characterized in that** a spacing between the display means (14) is selected in a horizontal and vertical direction with respect to an arrangement of the control unit (11), of the input unit (12a - 12y) and of the output unit (13a - 13y) with respect to one another such that the display means (14) can be read free of distortion.

9. A modular safety control (10) in accordance with any one of the preceding claims, **characterized in that** the readable text (T) for the second display mode is freely configurable as user-defined text in the control unit (11).

## Revendications

1. Commande de sécurité modulaire (10) comportant une unité de commande centrale (11), au moins une unité d'entrée (12a - 12y) pour recevoir des signaux d'entrée d'un émetteur de signal (K, LG, NT), et au moins une unité de sortie (13a - 13y) pour émettre des signaux de sortie à au moins un actionneur connecté (R, S), dans laquelle sont prévus des moyens d'affichage (14) pour afficher des états de l'unité d'entrée (12a - 12y) et de l'unité de sortie (13a - 13y), **caractérisée en ce que**
l'unité de commande (11) comprend des moyens d'affichage (14) et est conçue de telle sorte que tous les moyens d'affichage (14) de la commande de sécurité modulaire (10) sont pilotables par l'unité de commande (11) et tous les moyens d'affichage (14) sont activables dans un premier mode d'affichage ou dans un second mode d'affichage par l'unité de commande (11), et l'unité de commande (11) est conçue pour sélectionner le premier ou le second mode d'affichage en correspondance d'un événement prédéterminé qui peut être pertinent ou non pertinent en termes de sécurité, et dans le premier mode d'affichage qui est sélectionné lorsque l'événement est un événement non pertinent en termes de sécurité, les moyens d'affichage (14) affichent les états sous forme de signaux lumineux ponctuels (LS), et dans le second mode d'affichage qui est sélectionné lorsque l'événement est un événement pertinent en termes de sécurité, les moyens d'affichage (14) affichent les états sous forme de texte lisible (T).

2. Commande de sécurité modulaire (10) selon la revendication 1, **caractérisée en ce que** les moyens d'affichage (14) sont réalisés sous forme de matrice à points à DEL sur l'unité de commande (11), sur l'unité d'entrée (12a - 12y) et sur l'unité de sortie (13a - 13y).

3. Commande de sécurité modulaire (10) selon la revendication 1 ou 2, **caractérisée en ce que** le texte lisible (T) est affichable de façon statique ou dynamique.

4. Commande de sécurité modulaire (10) selon la revendication 3, **caractérisée en ce que** le texte lisible (T) est affichable sous forme de texte défilant par les moyens d'affichage (14).

5. Commande de sécurité modulaire (10) selon l'une des revendications précédentes, **caractérisée en ce que** l'unité de commande (11) pilote les moyens d'affichage (14) dans un intervalle de temps fixe, de sorte que les états sont affichables dans l'intervalle de temps fixe.

6. Commande de sécurité modulaire (10) selon l'une des revendications précédentes, **caractérisée en ce que** l'unité de commande (11), l'unité d'entrée (12a - 12y) et l'unité de sortie (13a - 13y) sont reliées entre elles par un système de bus (BS), de sorte que les unités (12a - 12y ; 13a - 13y) sont agencées de façon décentralisée les unes par rapport aux autres.

7. Commande de sécurité modulaire (10) selon la revendication 6, **caractérisée en ce que** l'unité de commande (11) transmet le texte lisible (T) à l'unité d'entrée et de sortie centrale (12a - 12y ; 13a - 13y) au moyen du système de bus (BS), de sorte que le texte lisible (T) est affichable en défilement par les moyens d'affichage (14) des unités (12a - 12y ; 13a - 13y).

8. Commande de sécurité modulaire (10) selon l'une des revendications précédentes, **caractérisée en ce que** une distance entre les moyens d'affichage (14) en directions horizontale et verticale par rapport à un agencement de l'unité de commande (11), de l'unité d'entrée (12a - 12y) et de l'unité de sortie (13a - 13y) les unes par rapport aux autres est choisie de telle sorte que les moyens d'affichage (14) sont lisibles sans distorsion.

9. Commande de sécurité modulaire (10) selon l'une des revendications précédentes, **caractérisée en ce que** pour le second mode d'affichage pertinent en termes de sécurité, le texte lisible (T) est librement configurable sous forme de texte personnalisé dans l'unité de commande (11).
